# EUROPEAN PATENT APPLICATION

(11) **EP 4 847 402 A1**
(43) Date of publication of application: **02.12.2026**
(21) Application number: 26180371.2
(22) Date of filing: 21.05.2026
(51) Int. Cl.: B65B 69/00, B26D 7/18, B65B 61/06, B65B 61/08, B65B 61/18, B65G 15/22, B65B 21/00

(54) **AUTOMATED SYSTEM FOR REMOVING WRAPPING FROM PRODUCTS**

(30) Priority: 28.05.2025 US 202563813241 P
(71) Applicant: Polycerf, Inc, Pinellas Park, Florida 33782 (US)
(72) Inventor: Cerf, Olivier, St. Petersburg (US)
(74) Representative: Lees, Kate Jane

(57) **Abstract**

A system and method for removing wrapping from a package includes one or both of a herringbone separator and a suction separator. The herring bone separator has several diverging conveyor belts that both move the package along as well as pull apart the wrapping from the bottom of the package. The suction separator has suction cups that are evacuated by a vacuum source and grab onto the wrapping from above the package to remove the wrapping from the top portion of the package.

## Description

### FIELD OF THE INVENTION

The present invention relates generally to packaging assemblies and methods and, more particularly, relates to assemblies operably configured to manipulate, e.g., cut and/or remove a wrapping (e.g., film) disposed on a package.

### BACKGROUND OF THE INVENTION

Packages are often received with a wrapping of a material surrounding each package for protection from environmental intrusion of dirt, debris, water, and moisture. Often the material is a polymer. Before accessing contents of such packages, the plastic material need be removed and discarded. For example, is some environments, multiple containers or bottles are received in on wrapping (e.g., overwrapped with a plastic or polymer film) and each container or bottle is to be repackages in a different configuration (e.g., a 36 pack is received and must be separated into 6 packs).

What is needed is an automated system that scores/cuts the wrapping material and separates the wrapping material from the package.

### SUMMARY OF THE INVENTION

A first aspect of the present invention provides a system for removing wrapping from a package, the system comprising a mechanism that cuts the wrapping that is around the package at a bottom surface of the package to form a cut along an axis of movement of the package; a herringbone separator that has several diverging conveyor belts that each move away from the axis of movement of the package so that as the plurality of diverging conveyor belts moves the package along the axis of movement of the package, friction from the plurality of diverging conveyor belts pulls the wrapping away from the bottom surface of the package.

In embodiments, the herringbone separator further comprises guide rails, the guide rails positioned at each side of the package keeping the package from moving laterally. A position of the guide rails is preferably adjustable to accommodate a width of a package.

In preferred embodiments, the system further includes a suction separator, the suction separator preferably having two drums that rotate in opposing directions, each drum of the two drums having at least one suction cup wherein a vacuum is provided to the at least one suction cup through a conduit internal to each drum, the conduit feeding the vacuum from an internal source from a rotary pneumatic fitting. Preferably, the system further comprises an upper conveyor belt and a lower conveyor belt, the upper conveyor belt and the lower conveyor belt being driven by the two drums and having orifices that align with the at least one suction cup such that the at least one suction cup protrudes out of the orifices for capturing the wrapping and transporting the wrapping away from the package between the upper conveyor belt and the lower conveyor belt.

Preferably, means is provided for adjusting a height of the suction separator above a conveyor system that moves the package.

In another aspect of the present invention there is provided a method of removing wrapping from a package, the method comprising cutting the wrapping that is around the package at a bottom surface of the package to form a cut along an axis of movement of the package and using a plurality of diverging conveyor belts of which each conveyor belt of the plurality of diverging conveyor belts is moving away from the axis of the movement of the package, pulling the wrapping from the bottom surface of the package while moving the package in the axis of movement of the package.

In preferred embodiments, the method further comprises maintaining a lateral position of the package upon the plurality of diverging conveyor belts using guide rails, the guide rails being positioned at each side of the package keeping the package from moving laterally. The method may further comprise adjusting a location of the guide rails to accommodate a width of the package.

In embodiments, the method further comprises cutting the wrapping that is around the package at each side surface of the package to form a second cut along the each side surface of the package parallel to the axis of movement of the package, pulling the wrapping from the top surface of the package using suction and moving the wrapping away from the suction. Preferably a suction separator that has two drums is used, each drum of the two drums rotating in opposing directions, each drum having at least one suction cup, providing a vacuum to the at least one suction cup through a conduit internal to the each drum, the conduit feeding the vacuum from an external source of the vacuum through a rotary pneumatic fitting, the wrapping being moved away from the at least one suction cup between the two conveyor belts. The method may further comprise adjusting a height of the suction separator above a conveyor system that moves the package.

In a third aspect of the present invention there is provided a method for removing wrapping from a package, the method including cutting the wrapping that is around the package making a cut at a bottom surface of the package to form a cut along an axis of movement of the package and making cuts on each side of the package to form two cuts that are substantially parallel to the axis of movement of the package, using a herringbone separator to pull apart the wrapping at the cut at the bottom surface, preferably wherein the herringbone separator has a plurality of diverging conveyor belts in which each conveyor belt moves away from the axis of the movement of the package. The method further includes using a suction separator to pull the wrapping from the top of the package. Preferably, the suction separator has two drums that rotate in opposing directions, each drum has at least one suction cup and a vacuum is provided to the at least one suction cup through a conduit internal to each drum, feeding the conduit with the vacuum from an external source through a rotary pneumatic fitting. The suction separator may further include an upper conveyor belt and a lower conveyor belt, the upper conveyor belt and the lower conveyor belt being driven by the two drums and having orifices that align with the at least one suction cup such that the at least one suction cup protrudes out of the orifices for capturing the wrapping and transporting the wrapping away from the package between the upper conveyor belt and the lower conveyor belt. The package moves along the axis of the movement by the plurality of diverging conveyor belts.

The system and method of the aspects of the present invention are particularly suitable for removing wrapping from a package comprising a plurality of containers held together by the wrapping. Preferably, the plurality of containers comprise a plurality of bottles.

### BRIEF DESCRIPTION OF DRAWINGS

The invention can be best understood by those having ordinary skill in the art by reference to the following detailed description when considered in conjunction with the accompanying drawings in which:
FIGS. 1-2 depict an overview of an automated packaging assembly designed to remove wrapping from package in accordance with one embodiment of the present invention;
FIGS. 3-4 depict lateral blades in the assembly of FIG. 1 as they cut through the wrap on the sides as the package progresses and a ventral blade as it cuts through the wrap on the bottom of the package as it progresses, respectively;
FIGS. 5-10 depict a suction harvester that removes film or wrap in accordance with one embodiment of the present invention; and
FIGS. 11-17 depicts a herringbone harvester that removes film or wrap in accordance with another embodiment of the present invention.

### DETAILED DESCRIPTION OF THE INVENTION

Reference will now be made in detail to the presently preferred embodiments of the invention, examples of which are illustrated in the accompanying drawings. Throughout the following detailed description, the same reference numerals refer to the same elements in all figures.

Before the present invention is disclosed and described, it is to be understood that the terminology used herein is for the purpose of describing particular embodiments only and is not intended to be limiting. The terms "a" or "an," as used herein, are defined as one or more than one, wherein the utilization of "a" or "an" does not mean multiple structures with various functions may be utilized to equate to single claimed structure with claimed functionality. The term "plurality," as used herein, is defined as two or more than two. The term "another," as used herein, is defined as at least a second or more. The terms "including" and/or "having," as used herein, are defined as comprising (i.e., open language). The term "coupled," as used herein, is defined as connected, although not necessarily directly, and not necessarily mechanically. The term "providing" is defined herein in its broadest sense, e.g., bringing/coming into physical existence, making available, and/or supplying to someone or something, in whole or in multiple parts at once or over a period of time.

As used herein, the terms "about" or "approximately" apply to all numeric values, whether or not explicitly indicated. These terms generally refer to a range of numbers that one of skill in the art would consider equivalent to the recited values (i.e., having the same function or result). In many instances these terms may include numbers that are rounded to the nearest significant figure. In this document, the term "longitudinal" should be understood to mean in a direction corresponding to an elongated direction of the extender, i.e., from one end to an opposing end of the extender, wherein "transverse" should be understood to mean a direction corresponding to a direction opposite the longitudinal direction.

The attached figures are incorporated in and form part of the specification, and serve to further illustrate various embodiments and explain various principles and advantages all in accordance with the present invention. Moreover, it is believed that the invention will be better understood from a consideration of the following description in conjunction with the drawing figures, in which like reference numerals are carried forward.

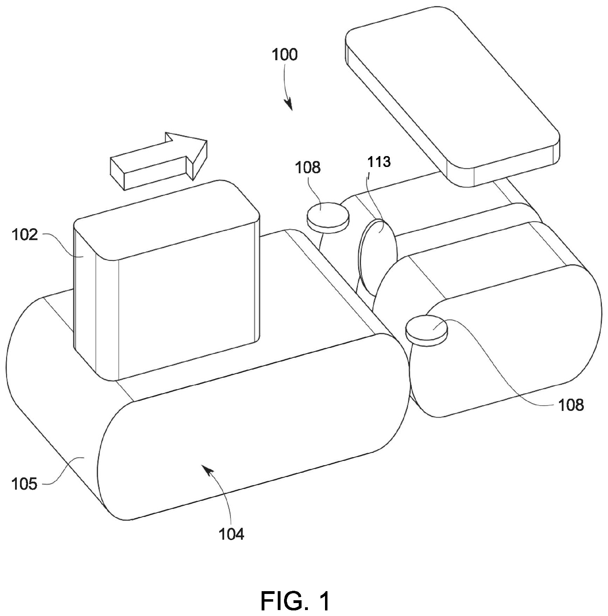

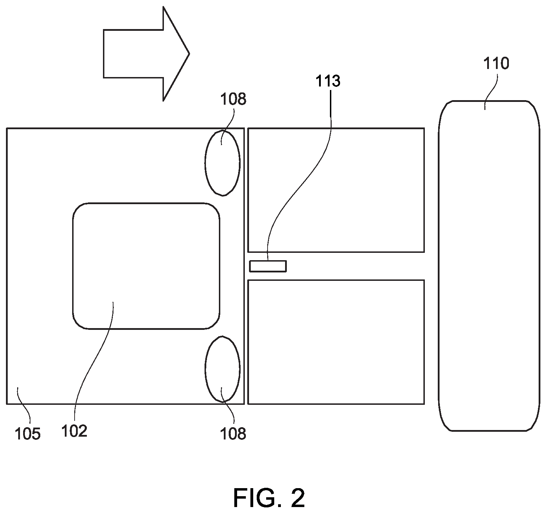

Referring now to FIGS. 1-4 (along with the other figures herein), embodiments of the present inventions are shown depicting several advantageous features of the present invention, but as will be described below, the inventions can be provided in several shapes, sizes, combinations of features and components, and varying numbers and functions of the components.

Packages 102 are often wrapped with a wrapping film to provide stability, protection and preservation. When such packages are needed, for example, for repackaging in different configurations, the wrapping film needs to be removed. Before removing wrapping film from packages 102, the film needs to be cut or scored (weakened). Throughout this description, this wrapping film will be referred to as wrap 101.

In the embodiments shown, the package 102 with wrap 101 is transported along a conveyance system 104/105, which is any know conveyance system such as a conveyor belt 105 or another type of automated transport mechanism that ensures the package 102 moves smoothly and consistently in a specific direction. FIGS. 1-4 depict an automated machine 100 designed to remove wrapping from package. In various industries, packages are often wrapped to provide stability, protection and preservation. The process of removing this wrap 101 can be labor-intensive and time-consuming when done manually. In the prior art, a package is typically wrapped with no available techniques to automatically un-wrap. The term "wrap" includes any pliable material used to encase a package for protection or distribution and in some embodiments is made from a polymeric material. FIGS. 1-4 depict an automated solution for removing wrap 101 from packages 102. This is accomplished by cutting then displacing wrapping such that the wrap 101 may be automatically removed from the packages 102.

Still referring to FIGS. 1-4, a wrapped package 102 is transported along a conveyance system 104 which may include a conveyor belt 105 or another type of automated transport mechanism selectively movable over a track assembly. This conveyance system 104 ensures the package moves smoothly and consistently in a specific direction. As the package 102 moves along the conveyance system 104, the package 102 passes a vertical cutting device 113. The vertical cutting device 113 cuts through the wrap 101 without damaging the package 102. The vertical cutting device 113 cuts/scores the wrap 101 while maintaining the integrity of the package 102. Depending on the type and size of the package 102 and the material, thickness, and shape of the wrap 101, in some embodiments, multiple cutting devices are used such as horizontal cutting device 108. In some embodiments, the vertical cutting device 113 and/or the horizontal cutting device 108 are any known cutting device such as a blade, a razor blade, a pin, a wedge blade, a circular cutting blade, and a laser cutting device.

In the embodiment shown, the vertical cutting device 113 and/or the horizontal cutting device 108 maintains the integrity of the package 102. Depending on the type and size of the package 102, and the material, thickness, and shape of the wrapped package 102, multiple cutting tools, e.g., two horizontal cutting device 108 are employed. The vertical cutting device 113 and/or the horizontal cutting device 108 work together to ensure the wrap is completely separated from the package 102. After the wrap 101 is cut, the package continues to a later station 110 where the cut/scored wrap is removed. In some embodiments, the station 110 involves manual removal while in other embodiments, the station 110 has an automated system that pulls the wrap 101 away from the package 102, as will be described.

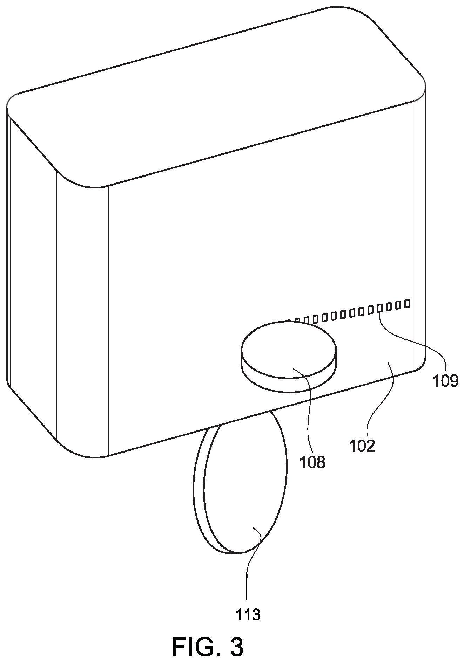

It is fully anticipated that the horizontal cutting device(s) 108 is/are disposed and configured at substantially perpendicular (+/- 10°) orientations relative to the vertical cutting device 113and substantially parallel (e.g., +/- 10°) orientations to the conveyor belt 105. In some embodiments, the horizontal cutting device(s) 108 is/are disposed at a substantially level height (e.g., +/- 0.5 inches) relative to the conveyor belt 105, as illustrated in FIG. 3, of the conveyor belt 105. In some embodiments, the vertical cutting device 113 and/or the horizontal cutting device 108 are adjustable laterally and/or vertically with servo motors for precising cutting of the wrapped package 102) and are rotatably coupled to an axel that is coupled to a track that is also movable with servo motors. The arrow depicted in FIGS. 1-2 illustrates the direction of movement for the package 102.

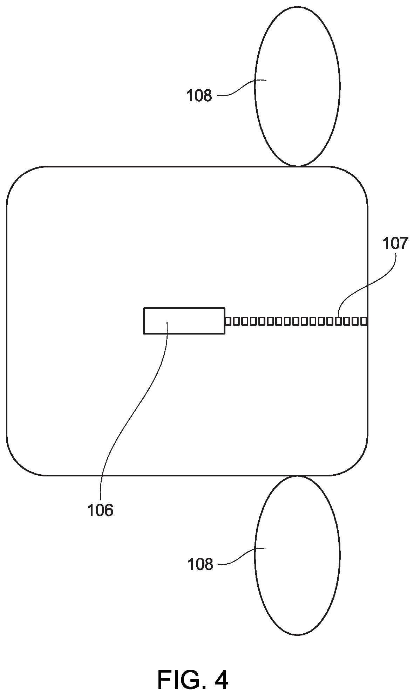

In FIG. 3, a partial side cut line 109 is shown while in FIG. 4, a partial top cut line 107 is shown.

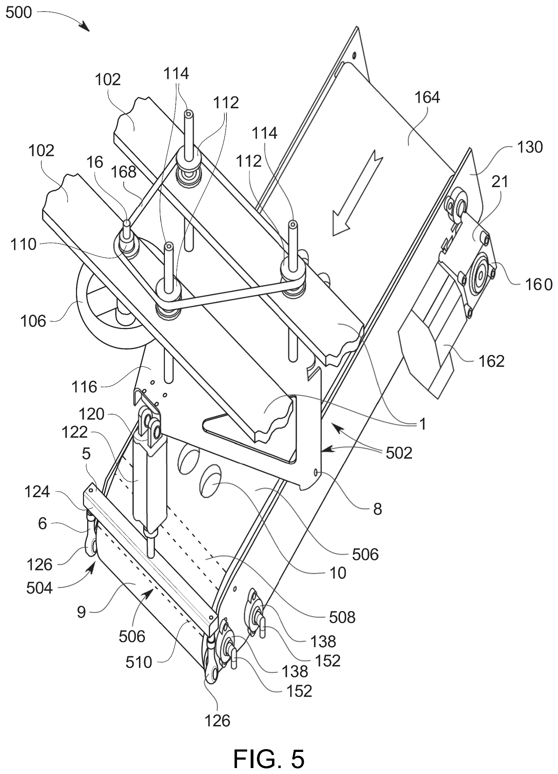

In one embodiment, a system for removal and relocation of wrap 101 from a package 102 is known as a suction harvester 500 is shown in FIGS. 5-10. The suction harvester 500 comprises a rotating drum equipped with a series of suction cups 148. The suction cups 148 align with holes 17 in an overhead conveyor belt, allowing them to extend downwardly through the overhead conveyor belt and make contact with the wrap 101 (as the wrap 101 was cut as described above). Once the wrap 101 is engaged by the suction cups 148, the wrap 101 is fed into the conveyor belt. The suction harvester 500 further includes an upper conveyor belt and a lower conveyor belt that pinch the wrap 101 therebetween, ensuring that the wrap 101 is securely held and transported for disposal. The wrap 101 is then transported to a designated receptacle for disposal or further processing.

In some embodiments, there is a frame and height adjustment of the harvester as the system for removal and relocation of wrap 101 is mounted to a frame that uses ACME threads with a chain mechanism to adjust the vertical position of harvester for removal and relocation of wrap 101. The height adjustment is achieved by turning a handle until the harvester is positioned appropriately above the package 102. The frame also includes a mounted hinge on one side, allowing pivoting of the harvester for removal and relocation of wrap 101. The opposite side of the suction harvester 500 actuates downward using a pneumatic cylinder, enabling precise control of the position relative to the package 102.

A suction drum is a shaft that drives the conveyor belt and runs a vacuum internally to a set of suction cups 148. These suction cups 148 are designed to effectively grab the wrap 101 that has been previously cut/scored. There are two suction drums that rotate in opposite directions, feeding the suction cups towards each other.

Surrounding the drums is a transfer belt. The suction cups 148 rotate circularly while the belt moves along a path from the package 102 to a receptacle. As the suction cups 148 hold onto the wrap 101 and rotate towards each other, the transport belt takes over and pinches the wrap 101. The drum continues to rotate, peeling the wrap 101 away from the suction cups 148 and transferring the wrap 101 to the conveyor belts. The upper and lower conveyor belts continue to carry the wrap 101 along the belt path until the wrap 101 reaches a receptacle where the wrap 101 is discharged. In some embodiments, pressurized gas (e.g., air) is used to eject the wrap 101 into the receptacle.

With reference to FIGS. 5-10, detailed views depicting a suction harvester 500 that removes wrap 101 from a package 102 is depicted. The suction harvester 500 removes and relocates wrap 101 from the package 102. In general, the suction harvester 500 includes a rotating drum equipped with a series of suction cups 148. These suction cups 148 align with holes 17 in a conveyor belt, allowing the suction cups 148 to make contact with and secure the wrap 101. The suction harvester 500 includes an upper conveyor belt and a lower conveyor belt. Once the wrap 101 is engaged by the suction cups 148, the wrap 101 is fed into the conveyor belt system between the upper conveyor belt and the lower conveyor belt that pinch the wrap 101, ensuring the wrap 101 is securely held and transported. The wrap 101 is then relocated to a designated receptacle for disposal or further processing.

In more detail, the suction harvester 500 includes three primary structural components: a frame assembly 502 (that in some embodiments includes a main frame 1, auxiliary frame 2, and a lower main frame 7), a drum 504, and a conveyor 506.

A main frame 1 supports the suction harvester assembly and is mounted within the production line so that after the wrap 101 on the packages 102 is cut/scored, the packages 102 pass beneath the suction harvester 500 during operation.

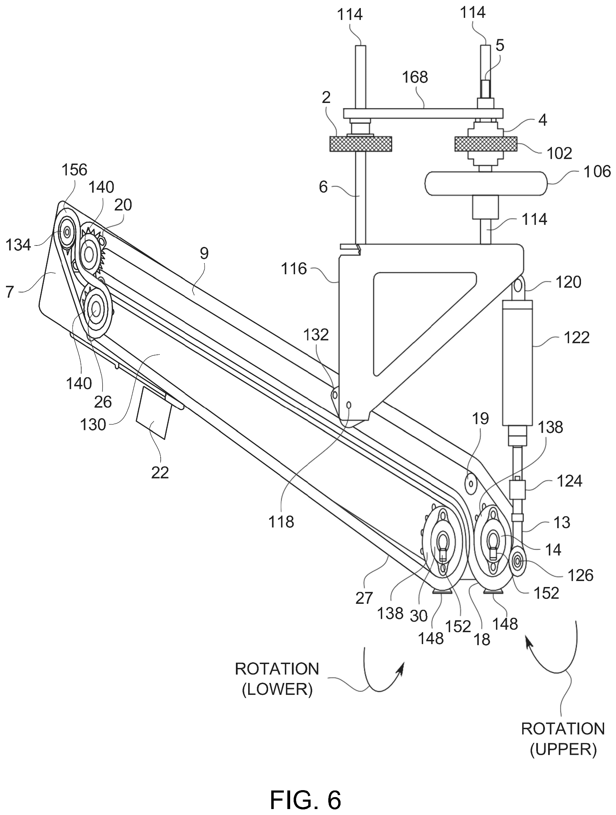

As shown best in FIG. 6, the auxiliary frame 116 is suspended from one or more height adjustment threaded rods 114, allowing the auxiliary frame to be raised or lowered relative to the package 102 by rotation of a manual adjustment handle 106. When the adjustment handle 106 is rotated, the adjustment handle drives a chain 168 for synchronized height adjustment such that all associated threaded rods 114 rotate simultaneously, maintaining level motion of the auxiliary frame 116.

A cylinder hinge 120 connects a pneumatic cylinder 122 to the auxiliary frame 116, providing for actuation of the lower conveyor system while maintaining pivot motion relative to the auxiliary frame 116.

A cylinder mounting arm 124 is fixed to the pneumatic cylinder and includes two rod end connections 126 secured to opposing sides of the primary frame 1, providing for free rotation during actuation.

The suction harvester 500 pivots about a pivot shaft 118 supported by bearings 104, allowing the conveyor system to rotate upward or downward relative to the auxiliary frame 116 as the pneumatic cylinder 122 actuates.

The suction harvester 500 includes an upper conveyor belt 164 and a lower conveyor belt 166 arranged such that the belts move toward one another to pinch and extract loose film from the top surface of the package 102. The upper conveyor belt 164 includes a series of openings spaced to align with suction cups 148 mounted on a suction roller 136. The spacing of the belt openings 10 is matched to the effective circumference of the suction roller 136 to ensure that as the suction roller 136 rotates, the belt openings 17 align with the suction cups 148.

A suction roller 136 is supported on bearings 138 and rotates about a shaft 150 that includes an internal conduit for supplying vacuum to each of the suction cups 148. Vacuum is delivered from an external source (not shown) through a rotary pneumatic fitting 152, which remains stationary while supplying vacuum through the internal conduit of the shaft 150 to the suction cups 148.

A second suction roller 136 rotates in the opposite direction about a shaft 150 that includes an internal conduit for supplying vacuum to each of the suction cups 148. As above, vacuum is delivered from an external source (not shown) through a rotary pneumatic fitting 152, which remains stationary while supplying vacuum through the internal conduit of the shaft 150 to the suction cups 148.

Vertical height adjustment of the auxiliary frame 116 is controlled by the adjustment handle 106, which rotates a handle shaft and drives a height adjustment sprocket 110. Rotation of the height adjustment handle 106 advances a roller chain 168, which drives multiple driven sprockets and their corresponding threaded rods 114, causing all threaded rods 114 to rotate in synchronization. This synchronized motion raises or lowers the auxiliary frame 116 until the conveyor belts are positioned at an optimal height above the wrap 101 that is still on the package 102 prior to cylinder actuation.

A conveyor drive motor 158 drives both upper conveyor belt 164 and lower conveyor belt 166 simultaneously through a chain and sprocket linkage.

The adjustment handle wheel 106 is supported by bearings 104 and rotates a handle shaft which actuates the threaded rods 114 to raise or lower the auxiliary frame 116.

The harvester frame 136 pivots around the pivot shaft 118 mounted to the auxiliary frame 116, while the pneumatic cylinder 122 connected through the cylinder hinge 120 actuates the conveyor system upward or downward.

The cylinder mounting arm 124 includes rod ends 126 secured to the main frame, allowing pivoting motion during actuation.

The upper conveyor drum 150 rotates about its bearing 132 and receives vacuum through a rotary pneumatic fitting 152. A drive sprocket 140a, mounted on the output shaft of the conveyor drive motor 158, drives a roller chain 156. The roller chain 156 drives a driven sprocket 140b connected to the upper conveyor system, thereby synchronizing motion between the upper conveyor belt 164 and lower conveyor belt 166. An idler sprocket 134 maintains proper chain tension and tooth engagement.

The lower conveyor belt 166 is driven via a driven shaft supported by bearings 138, while the upper conveyor belt 164 rotates in the opposite direction.

During operation, the upper conveyor belt 164 rotates clockwise while the lower conveyor belt 166 rotates counterclockwise, drawing the wrap 101 inward between the lower conveyor belt 166 and the upper conveyor belt 164 and, therefore, upward from the upper surfaces of the package 102.

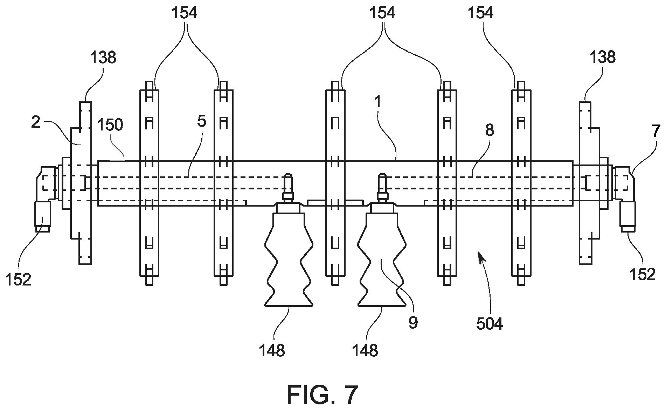

FIG. 7 shows a detailed plan view of the suction roller assembly. A main suction roller shaft 150 is supported by bearings 138 mounted on the conveyor frame 130. The main suction roller shaft 150 includes an internal conduit that supplies vacuum from an external source to the suction cups 148. A rotary pneumatic fitting 152 is connected to the end of the main suction roller shaft 150 and remains stationary while the main suction roller shaft 150 rotates, maintaining vacuum supply to each of the suction cups 148. Additional sprockets 154 are mounted along the shaft circumference and are matched to the conveyor drive architecture to move the conveyor belts.

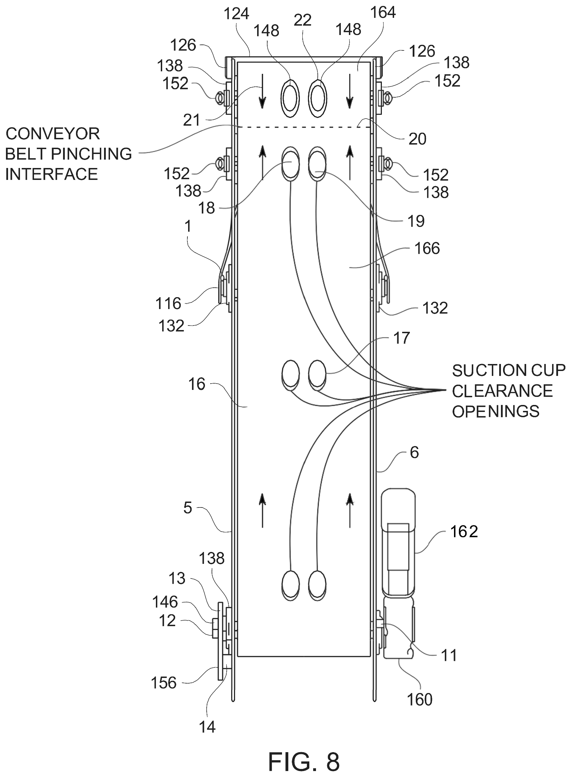

FIG. 8 shows a bottom view of the suction harvester 500. The auxiliary frame 116 is suspended from the threaded rods 114 and pivots about the pivot shaft 118. Conveyor side frames 5 are connected to the cylinder mounting arm 124, with rod ends 126 allowing rotational movement. The conveyor drive motor 158 drives both the upper and lower conveyor shafts via a chain linked drive arrangement. The conveyor belt openings 17 align with the suction cups 148 on the main suction roller shaft 150, allowing wrap 101 to be pinched and extracted between the lower conveyor belt 166 and the upper conveyor belt 164.

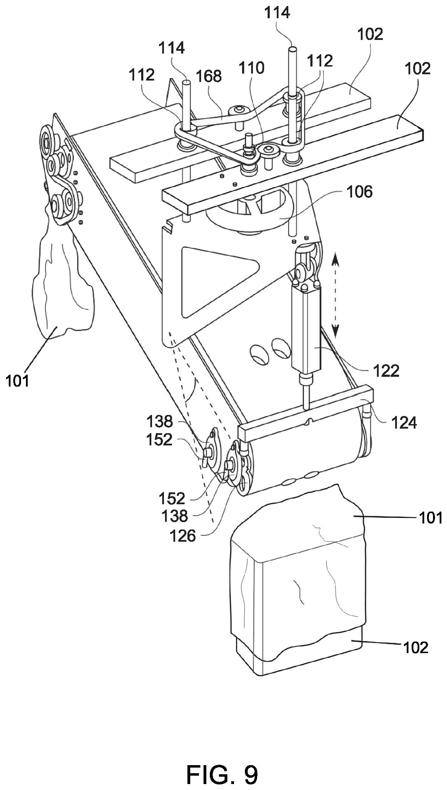

In FIG. 9, the wrap 101 is shown being pulled off a package 102 and eventually separated for disposal at the end of the lower conveyor belt 166 and the upper conveyor belt 164

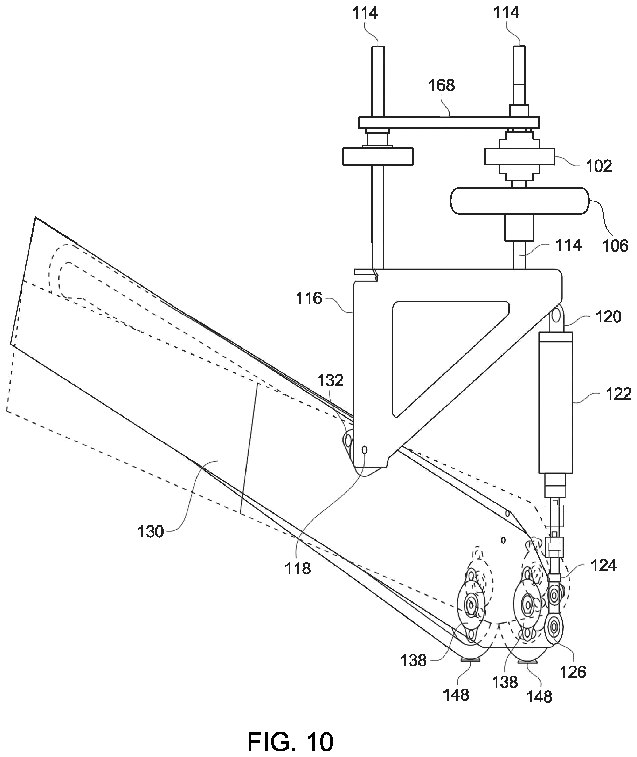

Referring to FIGS. 5-6, the main frame 1 of the assembly is mounted inside the overall frame and conveyor 7 and is placed on a production line such that a wrapped package may be positioned beneath the main frames and staged for film removal (illustrated in FIG. 9). The auxiliary frame 2 hangs from a set of ACME threads 26 that allow it to be positioned up/down for best engagement with the package 102. The cylinder hinge 3 attaches to the auxiliary frame 2, wherein a pneumatic air cylinder 4, electric actuator, or other cylinder actuate to raise/lower the conveyor system/frame 7 beneath. A cylinder mount or bar member 5 is fixed to an end of the pneumatic cylinder 4 and has two ball joint rod ends 6 that are secured to sides of the main harvester unit frame 7 but are configured to freely rotate. The lower frame member 7 pivots about the auxiliary frame 2 about point 8 which ties the two frame pieces 1, 7 together with a bearing that is configured to allow the lower frame member 7 to pivot (exemplified in different positions in FIG. 10).

The harvester frame 7 has an upper conveyor belt 9 that rotates in the direction (indicated with arrow in FIG. 5) such that the belt 9 will pinch film against a lower conveyor belt 27. In one embodiment, a motor 21 drives both the upper conveyor belt 164 and the lower conveyor belt 166 simultaneously via a roller chain linkage system. The upper conveyor belt 164 and the lower conveyor belt 166 have one or a several holes 17 that are spaced to align with the suction cups 148 on the suction drum 504. The spacing of the holes 17 is based on the effective circumference of the suction drum 504 as tips of the suction cup 148 encounter each other. As the suction drum 504 rotates and drives the conveyor belts, the holes 17 in the belt will align with the suction cups 148 of the suction drum 504. In some embodiments, the suction drum 504 includes a lower suction drum (e.g., suction drum 508) that rotates about a bearing 11 which holds the drum-shaft 504. In some embodiments, each suction drum-shaft includes an orifice that interfaces an internal conduit connecting the suction cups 148 to an off-site vacuum source that enters the shaft through a freely rotating pneumatic adapter 152. Similarly, the upper suction drum (e.g., drum 510) rotates in the opposite direction along the bearing 13 and is supplied vacuum via the same or other line(s) through another rotating pneumatics fitting 152.

With reference specifically to FIG. 9, the suction harvester 500 is depicted with a package 102 having the wrap 101 on top, e.g., after the wrap 101 has been cut as discussed above. The cylinder actuates up and down (as exemplified with the arrow) allowing the angle (as exemplified with the two lines) to pivot the system above and toward the package 102. Once the wrap 101 has been extracted, the package 102 continues without the wrap 101. The consumed wrap 101 is discharged out the rear of the system and may be placed into a receptacle.

FIG. 10 depicts the assembly 500 with the lower frame lowered to a lower position from a raised position (indicated with dashed lines).

In some embodiments, the assembly 500 is adjusted via a pivotable frame that uses ACME threads with a chain mechanism to adjust its height. The height adjustment is achieved by turning a handle until the system is positioned appropriately above the package 102. The frame also includes a mounted hinge on one side, allowing the harvester system to pivot. The opposite side of the harvester system actuates downward using a pneumatic cylinder, enabling precise control of the system's position relative to the package 102.

The suction drum(s) in the suction harvester 500 include a shaft that drives the conveyor belt and runs a vacuum through its center to a set of suction cups 148. These suction cups 148 are designed to effectively grab wrap 101. In some embodiments, there are two suction drums that rotate in opposite directions, feeding the suction cups 148 towards each other. Surrounding the drums is the transfer belt. The suction cups 148 rotate circularly while the transfer belt moves along a path from the package 102 to a receptacle. As the suction cups 148 grab the wrap 101 and rotate towards each other, the transport belt takes over and pinches the wrap 101. The suction drum continues to rotate, peeling the wrap 101 away from the suction cups and transferring it entirely to the transfer belts. The transfer belts include upper and lower conveyor belts and continue to feed the film along the transfer belt path until it reaches a receptacle where the wrap 101 is discharged. In some embodiments, pressurized air is used to eject the wrap 101 into the receptacle, although this is generally optional.

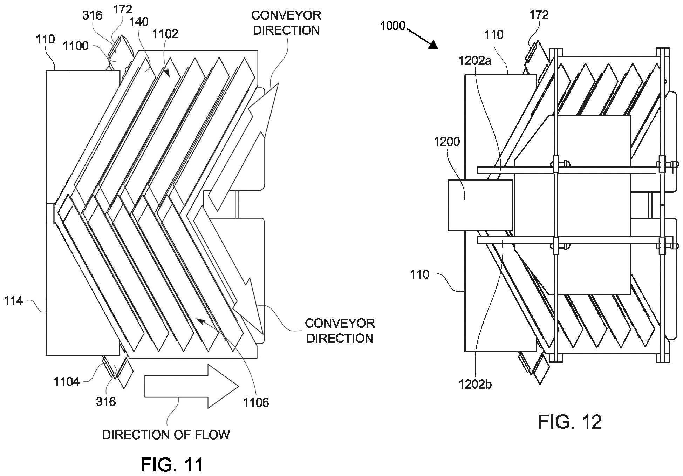

With reference to FIGS. 11-18, another embodiment showing a herringbone separator 1000 that automatically removes the wrap 101 from a package 102 is shown. The herringbone separator 1000 provides an automated solution for unwrapping the bottom of a package 102 that has been pre-slit as discussed above while still moving the package 102 forward. The herringbone separator 1000 utilizes staggered conveyors at angles to the direction of motion of the product 102 that generates forces that move the package 102 forward while simultaneously shearing the wrap 101 laterally, freeing the wrap 101 from the bottom surface of the package 102.

The package 102, which is wrapped and pre-cut ventrally along a bottom surface of the package 102 approaches the herringbone separator 1000 (e.g., on a horizontal conveyor belt). The herringbone separator 1000 then takes over the movement pulling the package 102 at alternating angles. The herringbone separator 1000 includes two or more diverging conveyor belts 1102/1106 that are organized in a herringbone pattern. The diverging conveyor belts 1102/1106 pull the wrap 101 with a lateral force to remove the wrap 101 as well as a forward force that continues movement of the package 102 (or the contents of the wrap 101). Guides are used to keep the package 102 moving forward only. As the diverging conveyor belts 1102/1106 move the package 102 forward and exert a lateral force on the wrap 101, the wrap 101 is flared out in the direction of the diverging conveyor belts 1102/1106 for removal from the package 102 (or contents of the wrap 101). Each of the diverging conveyor belt 1102/1106 provides sufficient friction such each the diverging conveyor belt 1102/1106 grips onto the wrap 101.

FIG. 11 illustrates an isometric overview of the herringbone separator 1000 configured to remove wrap 101 that was pre-cut or scored as described above as the package 102 progresses. The herringbone separator 1000 includes diverging conveyor belts 1102/1106 arranged such that the wrap 101 is pulled laterally away from the underside of the package 102 as the package 102 moves forward. One side of the herringbone separator 1000 is driven, for example, by a first right angle AC gearmotor 172, which controls the motion of a first set of diverging conveyor belts 1102. An opposing side of the herringbone separator 1000 is driven, for example, by a second right angle AC gearmotor 1104, which independently controls motion of a second set of diverging conveyor belts 1102 positioned on the opposite side of the package pathway.

The conveyor assemblies are supported by a conveyor frame 1114 and associated stiffeners 124/168, forming a rigid structure that maintains belt alignment during operation.

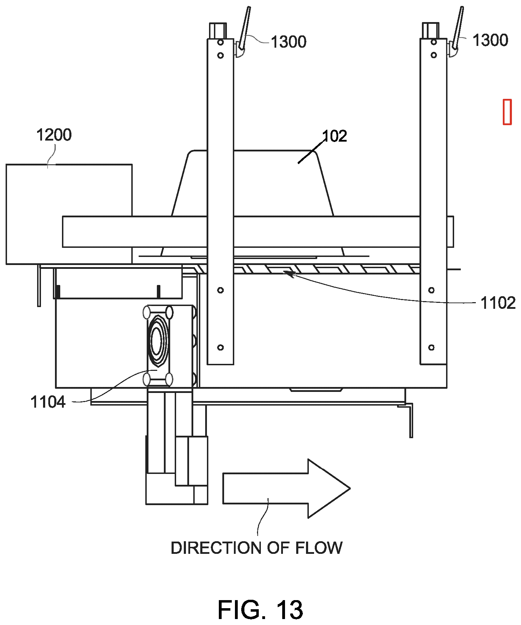

FIG. 13 shows a side view of the herringbone separator 1000, illustrating the vertical relationship between the diverging conveyor belts 1102/1106 and the package 102 as it moves through the herringbone separator 1000. The package 102 is supported atop the diverging conveyor belts 1102/1106 arranged to pull material laterally while maintaining forward package motion. The diverging conveyor belts 1102/1106 are supported by belt tracks 116 and idler assemblies128/130/134, providing continuous rotation and controlled tension of the diverging conveyor belts 1102/1106.

The wrapping material is pulled outwardly and lifted along the sides of the package 102 as the diverging conveyor belts 1102/1106 engage the wrap 101 from below.

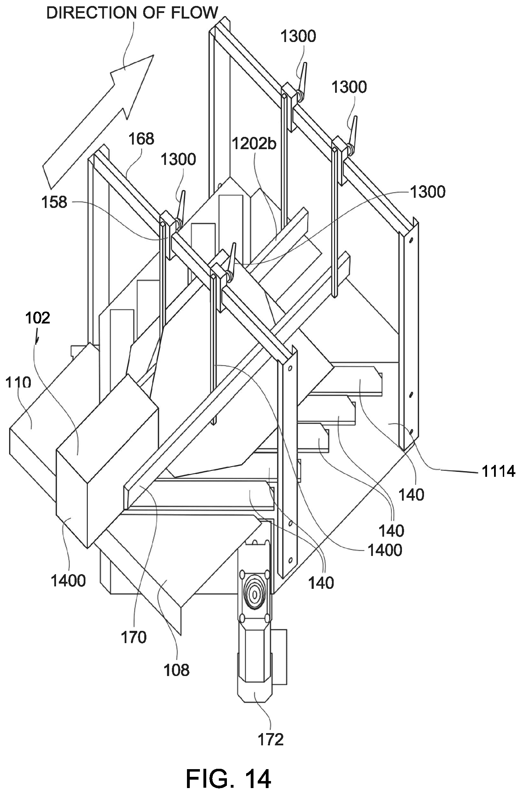

FIG. 14 illustrates a top view of the herringbone separator 1000, showing the package 102 entering the area above the diverging conveyor belts 1102/1106. As the package 102 advances, adjustable side guides 170 constrain lateral movement of the package 102 to maintain proper alignment between the package and the diverging conveyor belts 1102/1106.

The adjustable side guides 170 are carried by a gantry frame 168 and adjustable guide mounts 1300, which allow the guides 170 to be set based on the width of the package 102. While the package 102 is held laterally by the guides 170, the diverging conveyor belts 1102/1106 pull the wrap 101 outward and laterally away from the package 102. This action causes the wrapping to separate along a pre-cut line formed along the underside of the package 102.

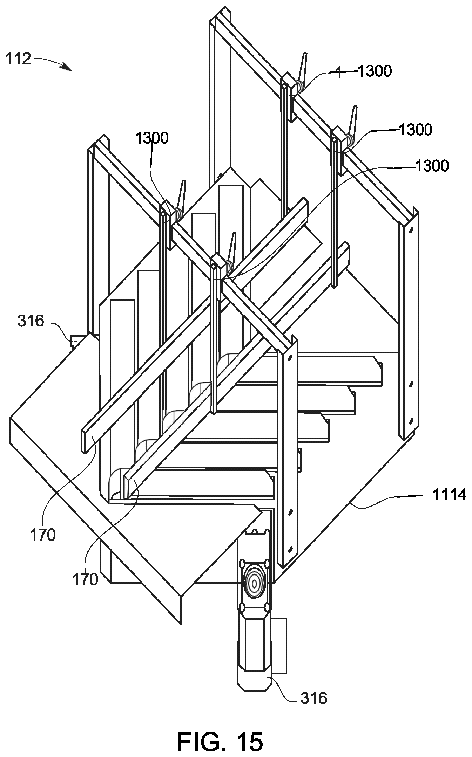

FIG. 15 shows the herringbone separator 1000 from an opposing isometric angle, highlighting the guide adjustment mechanism and conveyor geometry. Adjustable guide mounts 1300 adjust a distance between opposing adjustable side guides 170.

Rotation of the adjustable guide mounts 1300 permits the positioning of the adjustable side guides 170 relative to the pathway, of the package 102 preventing excessive lateral package movement of the package 102 during removal of the wrap 101, as the guides 170 engage the sides of the package 102 and hold the package 102 stable while allowing the wrapping to be pulled away by the diverging conveyor belts 1102/1106.

The diverging conveyor belts 1102/1106 are supported on a conveyor frame and reinforced by stiffeners. Each diverging conveyor belt 1102/1106 includes idler sprockets mounted on idler shafts and supported by idler holders. The material used for the diverging conveyor belts 1102/1106 provides a friction surface that engages the wrap 101 while allowing the package 102 to move forward.

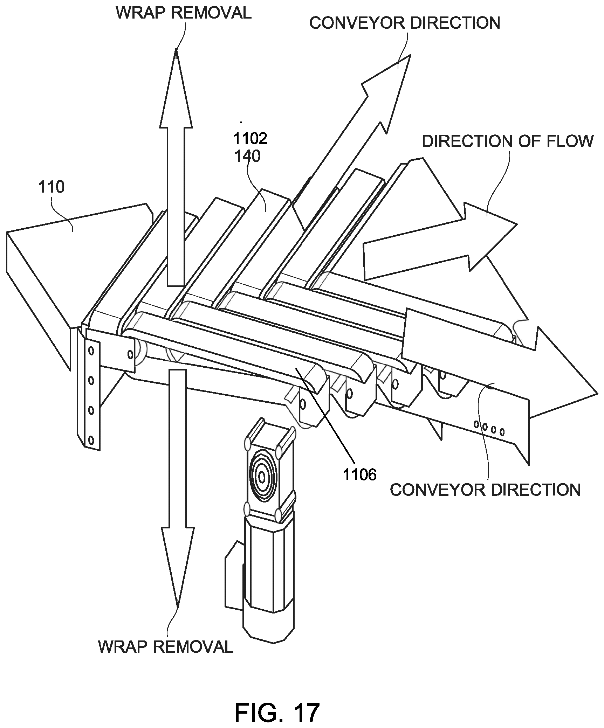

FIG. 17 illustrates an embodiment in which both sets of diverging conveyor belts 1102/1106 are configured to flip up. The flip up mechanisms includes a rip up deadplate and rip up conveyor frame that supports removable or serviceable diverging conveyor belts 1102/1106 sections.

Cross stiffeners and side mounts maintain structural integrity during operation and pivoting. Drive shafts transmit rotational motion to the diverging conveyor belts 1102/1106 using, for example, chain and sprocket arrangements.

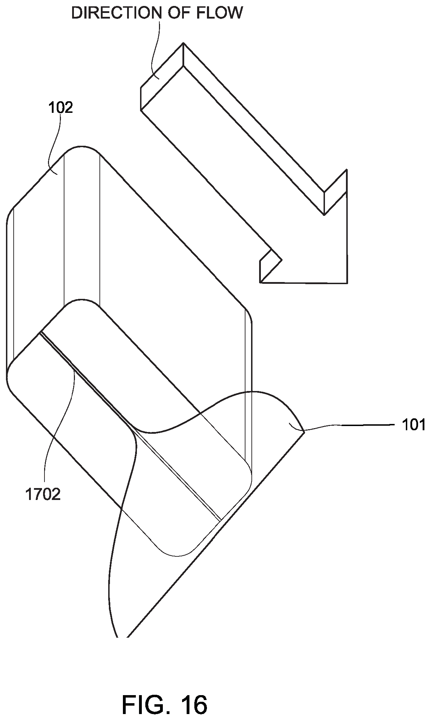

FIG. 16 illustrates the package 102 underside as it passes over the diverging conveyor belts 1102/1106 which are not drawn so as to be able to see the wrap 101. The wrap is pre-cut and separates at the cut line 1702 along the bottom of the package 102. As the diverging conveyor belts 1102/1106 pull the wrap 101 laterally outward, the underlying bottom of the package 102 is freed of wrapping material. The separated wrapping is pulled laterally away while the package continues forward.

More specifically, a package 102 is pre-cut ventrally along the bottom (as discussed above) and herringbone separator 1000 pulls the package 102 at diverging angles using the diverging conveyor belts 1102/1106. The diverging conveyor belts 1102/1106 are organized in a herringbone pattern, which pulls the film with a lateral force and applies a forward force for movement of the package 102. The diverging conveyor belts 1102/1106 are configured to generate an x- and y- component force vector on the wrap 101 and package 102. The guides 170 keep the package 102 itself from moving askew and in a resultant direction of the package 102 is forward only. As the diverging conveyor belts 1102/1106 pull the package 102 forward and the wrapping laterally, the wrapping is flared out so that the wrapping is more easily removed at a later stage. The diverging conveyor belts 1102/1106 have sufficient friction (e.g., a friction-inducing surface) such that the diverging conveyor belts 1102/1106 effectively grip onto the wrapping.

Although a specific order of executing process steps has been described and depicted, the order of executing the steps may be changed relative to the order shown in certain embodiments. Also, two or more steps shown or described as occurring in succession may be executed concurrently or with partial concurrence in some embodiments. Certain steps may also be omitted in for the sake of brevity. In some embodiments, some or all of the process steps can be combined into a single process.

Equivalent elements can be substituted for the ones set forth above such that they perform in substantially the same manner in substantially the same way for achieving substantially the same result.

It is believed that the system and method as described and many of its attendant advantages will be understood by the foregoing description. It is also believed that it will be apparent that various changes may be made in the form, construction and arrangement of the components thereof without departing from the scope and spirit of the invention or without sacrificing all of its material advantages. The form herein before described being merely exemplary and explanatory embodiment thereof. It is the intention of the following claims to encompass and include such changes.

## Claims

1. A system for removing wrapping from a package, the system comprising:
means for cutting the wrapping that is around the package at a bottom surface of the package to form a cut along an axis of movement of the package;
a herringbone separator having a plurality of diverging conveyor belts, each conveyor belt of the plurality of diverging conveyor belts moving away from the axis of the movement of the package; and
whereas the plurality of diverging conveyor belts moves the package along the axis of the movement of the package while friction from the plurality of diverging conveyor belts pulls the wrapping away from the bottom surface of the package.

2. The system of claim 1, the herringbone separator further comprising guide rails, the guide rails positioned at each side of the package keeping the package from moving laterally.

3. The system of claim 2, wherein a position of the guide rails is adjustable to accommodate a width of the package.

4. The system of any one of the preceding claims, further comprising:
a suction separator, the suction separator having two drums that rotate in opposing directions, each drum of the two drums having at least one suction cup whereas a vacuum is provided to the at least one suction cup through a conduit internal to the each drum, the conduit feed the vacuum from an internal source from a rotary pneumatic fitting; and
an upper conveyor belt and a lower conveyor belt, the upper conveyor belt and the lower conveyor belt are driven by the two drums and have orifices that align with the at least one suction cup such that the at least one suction cup protrude out of the orifices for capturing the wrapping and transporting the wrapping away from the package between the upper conveyor belt and the lower conveyor belt.

5. The system of claim 4, further comprising means for adjusting a height of the suction separator above a conveyor system that moves the package.

6. The system of any one of the preceding claims, wherein the package comprises a plurality of containers held together by the wrapping, preferably wherein the plurality of containers comprises a plurality of bottles.

7. A method of removing wrapping from a package, the method comprising:
cutting the wrapping that is around the package at a bottom surface of the package to form a cut along an axis of movement of the package; and
using a plurality of diverging conveyor belts of which each conveyor belt of the plurality of diverging conveyor belts is moving away from the axis of the movement of the package, pulling the wrapping from the bottom surface of the package while moving the package in the axis of movement of the package.

8. The method of claim 7, further comprising maintaining a lateral position of the package upon the plurality of diverging conveyor belts using guide rails, the guide rails positioned at each side of the package keeping the package from moving laterally.

9. The method of claim 8, further comprising adjusting a location of the guide rails to accommodate a width of the package.

10. The method of any one of claims 7 to 9, further comprising:
cutting the wrapping that is around the package at each side surface of the package to form a second cut along the each side surface of the package parallel to the axis of movement of the package;
pulling the wrapping from a top surface of the package using a suction separator that has two drums, each of the two drums rotating in opposing directions, each drum of the two drums having at least one suction cup, providing a vacuum to the at least one suction cup through a conduit internal to the each drum, the conduit feeding the vacuum from an external source of the vacuum through a rotary pneumatic fitting; and
moving the wrapping away from the at least one suction cup between two conveyor belts.

11. The method of claim 11, further comprising adjusting a height of the suction separator above a conveyor system that moves the package.

12. A method for removing wrapping from a package, the method comprising:
cutting the wrapping that is around the package making a cut at a bottom surface of the package to form a cut along an axis of movement of the package and making cuts on each side of the package to form two cuts that are parallel to the axis of movement of the package;
using a herringbone separator to pull apart the wrapping at the cut at the bottom surface, the herringbone separator having a plurality of diverging conveyor belts, each conveyor belt of the plurality of diverging conveyor belts moving away from the axis of the movement of the package;
using a suction separator to pull the wrapping from a top of the package, the suction separator having two drums that rotate in opposing directions, each drum of the two drums having at least one suction cup whereas a vacuum is provided to the at least one suction cup through a conduit internal to the each drum, feeding the conduit with the vacuum from an external source through a rotary pneumatic fitting, the suction separator further comprising an upper conveyor belt and a lower conveyor belt, the upper conveyor belt and the lower conveyor belt are driven by the two drums and have orifices that align with the at least one suction cup such that the at least one suction cup protrude out of the orifices for capturing the wrapping and transporting the wrapping away from the package between the upper conveyor belt and the lower conveyor belt; and moving the package along the axis of the movement of the package by the plurality of diverging conveyor belts.

13. The method of claim 12, further comprising keeping the package from moving laterally using guide rails, the guide rails positioned at each side of the package, preferably further comprising adjusting a position of the guide rails to accommodate a width of the package.

14. The method of claim 12 or claim 13, further comprising adjusting a height of the suction separator above a conveyor system that moves the package.

15. The method of any one of claims 7 to 14, wherein the package comprises a plurality of containers held together by the wrapping, preferably wherein the plurality of containers comprises a plurality of bottles.
